# EUROPÄISCHE PATENTSCHRIFT

(11) **EP 1 583 799 B1**
(45) Veröffentlichungstag und Bekanntmachung des Hinweises auf die Patenterteilung: **12.11.2008**
(21) Anmeldenummer: 03789418.5
(22) Anmeldetag: 24.12.2003
(51) Int. Cl.: C08L 69/00, C08L 51/04

(54) **HOMOGEN DURCHGEFÄRBTE ZUSAMMENSETZUNGEN AUF BASIS SCHLAGZÄHMODIFIZIERTEN POLYALKYLENTEREPHTHALAT/POLYCARBONAT BLENDS**
HOMOGENEOUS COMPOSITIONS, WHICH ARE DYED THROUGHOUT AND WHICH ARE BASED ON IMPACT-RESISTANT MODIFIED POLYALKYLENE TEREPHTHALATE/POLYCARBONATE BLENDS
COMPOSITIONS TEINTEES DE MANIERE HOMOGENE, A BASE DE MELANGES POLYALKYLENE-TEREPHTALATE/POLYCARBONATE, A RESILIENCE MODIFIEE

(30) Priorität: 07.01.2003 DE 10300110
(43) Veröffentlichungstag der Anmeldung: 12.10.2005
(73) Patentinhaber: Bayer MaterialScience AG, 51368 Leverkusen (DE)
(72) Erfinder: BRAIG, Thomas, 40476 Düsseldorf (DE); PAUL, Friedemann, 51469 Bergisch Gladbach (DE); WARTH, Holger, 41539 Dormagen (DE)
(86) Internationale Anmeldenummer: PCT/EP2003/014886
(87) Internationale Veröffentlichungsnummer: WO 2004/060999

(56) Entgegenhaltungen:
- EP-A- 0 277 835
- EP-A- 0 594 021
- EP-A- 0 829 517
- WO-A-02/086839
- WO-A-03/089517
- US-B1- 6 177 492

## Beschreibung

Die vorliegende Erfindung betrifft eingefärbte Zusammensetzungen auf Basis schlagzähmodifizierten Polyalkylenterephthalt/Polycarbonat-Blends und daraus hergestellte Formmassen, Halbzeuge und Formteile, die unlackiert oder nur mit einem transparenten Klarlack beschichtet beispielsweise für Kfz-Außenanwendungen eingesetzt werden.

Schlagzähmodifzierte Formmassen, die teilkristalline Polyester, amorphe Polycarbonate und Pfropfcopolymerisate enthalten, sind bekannt. Derartige Formmassen werden beispielsweise im Automobilsektor für Formteile wie Stoßfänger, Kotflügel, Kühlergitter, Blenden, Heckblenden, Schweller, Spoiler, Türgriffe, Tankdeckel, Verkleidungen, horizontale Bauteile wie Motorhauben oder Dachelemente, Türmodule oder ähnlichem eingesetzt. Voraussetzungen für den Einsatz in Kfz-Anwendungen sind hohe Wärmeformbeständigkeit, hohe Fließfähigkeit in der Schmelze, gute Lack-haftung, hohe Chemikalienbeständigkeit, hohe Steifigkeit, hohe Dimensionsstabilität und hohe Tieftemperaturzähigkeit aus.

Formteile aus schlagzähmodifizierten Polyalkylenterephthalat/-Polycarbonat-Blends werden gewöhnlich mit einem farbgebenden Lack, dem sogenannten Basislack, lackiert. Vor dem Basislack können die Formteile optional außerdem mit Primer und/oder Filler beschichtet worden sein. Auf den Basislack kann außerdem optional ein transparenter Klarlack aufgebracht werden. Diese Systeme werden im folgenden decklackierte Systeme genannt. Bei den decklackierten Systemen ist die Eigenfarbe der Formmassen unerheblich, da die Farbgebung durch den Basislack erfolgt.

Alternativ zu den decklackierten Systemen gibt es Systeme, die im folgenden durchgefärbte Systeme genannt werden. Bei durchgefärbten Systemen wird die Farbe des Formteils in der Anwendung durch die Eigenfarbe der Formmasse bestimmt, das heißt durchgefärbte Systeme werden nicht mit einem Primer, Filler oder farbgebendem Basislack lackiert. Optional können die durchgefärbten Systeme jedoch mit transparentem Klarlack beschichtet sein. Der Vorteil bei durchgefärbten Systemen liegt in der Kostenersparnis, da die Arbeitsschritte des Grundieren mit Primer und/oder Fillers sowie des Lackierens mit farbgebenden Basislacken und der dazugehörigen Trocknungen entfallen.

Bei durchgefärbten Systemen ist dagegen keine UV-Blockfunktion eines abdeckenden Basislacks gegeben. Bestenfalls kann ein UV-Klarlack bei durchgefärbten Systemen den Großteil der schädlichen UV-Strahlung abhalten. Dennoch müssen Formmassen, die durchgefärbten Systemen zugrunde liegen, eine hohe UV-Stabilität aufweisen, weshalb Schlagzähmodifikatoren auf Basis von Kautschuken mit konjugierten Dienen, wie beispielsweise Butadien in ABS- oder MBS-Kautschuken, nicht eingesetzt werden können.

Witterungsstabile PC/Polyester-Blends setzten daher beispielweise Acrylatkautschuke ein, wie in DE-A1 3302124 beschrieben wurde.

EP-B1 0 787 769 beschreibt den Einsatz von PC/Polyesterblends mit einer Kombination von AES- und Acrylatkautschuken um Formmassen mit verbesserter Witterungsstabilität und guter Zähigkeit zu erhalten.

Bei durchgefärbten Systemen ist neben der Witterungsstabilität jedoch auch die homogene Einfärbbarkeit von sehr großer Bedeutung. Gerade bei schlagzähmodifizierten PC/Polyesterblends mit Acrylat-Schlagzähmodifikatoren bei Spritzgussformteilen unerwünschte Farbinhomogenitäten auf, bei denen sich senkrecht zur Fließrichtung während des Spritzgussvorgangs periodisch wiederkehrende weniger eingefärbte Bereiche, die optisch heller wirken, mit tiefer eingefärbten Bereichen, die optisch dunkler oder farbintensiver wirken, ausbilden, die auch als Tigerstreifen bezeichnet werden. Für Formteile, die in der Endanwendung wie beispielsweise Kfz-Außenhaut - wie z.B. Kotflügel, Stoßfänger; . Heckklappe, Blende, Spoiler, Lufteinlassgitter, Motorhaube, Autodach -, Kfz-Innenraum, Elektrogehäuse, Elektronikgehäuse, die vom Anwender optisch wahrgenommen werden, sind diese Tigerstreifeneffekte nicht annehmbar.

Aufgabe war die Entwicklung von homogen eingefärbten schlagzähmodifizierten Polyalkylenterephthalat/Polycarbonat-Formmassen für Anwendungen in sogenannten durchgefärbten Systemen. Bei durchgefärbten Systemen werden erhöhte Anforderungen an die homogene Einfärbung der Formmassen bzw. der Formteile gestellt, da die Formmasseneinfärbung gleichzeitig für die Farberscheinung des fertigen Formteils in der Anwendung ist.

Die Erfahrung aus der Praxis zeigt, dass für Kfz-Anwendungen eingesetzte Materialien je nach konkretem Einsatzgebiet große Variationen in den aufgezählten Eigenschaften aufweisen können. Letztendlich entscheidend für Anwendungen in durchgefärbten Systemen ist jedoch die homogene Einfärbbarkeit. Diese homogene Einfärbbarkeit ist ein Schlüsselkriterium für den Materialeinsatz in durchgefärbten Systemen, neben den bereits erwähnten Materialeigenschaften wie beispielsweise Materialsteifigkeit, Wärmeformbeständigkeit und Tieftemperaturschlagzähigkeit.

Überraschend wurde nun gefunden, dass mit Schlagzähmodifikatoren basierend auf Pfropfcopolymerzusammensetzungen auf Basis von Acrylnitril/Ethylenpropylenkautschuken/Styrol (AES) eingefärbte schlagzähmodifizierte Polyalkylenterephthalat/Polycarbonat-Blends herstellen lassen, die zu Formteilen mit sehr homogener Einfärbung führen. Die erfindungsgemäßen Formmassen zeichnen sich darüber hinaus durch hohe Wärmeformbeständigkeit, hohe Fließfähigkeit in der Schmelze, gute Lackhaftung, hohe Chemikalienbeständigkeit, hohe Steifigkeit, hohe Dimensionsstabilität und hohe Tieftemperaturzähigkeit aus. Da AES-Kautschuke keine Doppelbindungsreste enthalten, sind sie außerdem UV-stabil.

Gegenstand der Erfindung ist die Verwendung von Zusammensetzungen, enthaltend
A) 4 bis 80, vorzugsweise 10 bis 60, besonders bevorzugt 12 bis 40, insbesondere 19 bis 29 Gew.%, mindestens eines Polyalkylenterephthalats, bevorzugt eines Polyethylenterephthalats oder eine Polybutylenterephthalats, besonders bevorzugt eines Polyethylenterephthalats,
B) 10 bis 90, vorzugsweise 20 bis 80, besonders bevorzugt 25 bis 55, insbesondere 30 bis 50 Gew.-%, mindestens ein aromatisches Polycarbonat,
C) 1,5 bis 30, vorzugsweise 3 bis 25, besonders bevorzugt 6 bis 20, insbesondere 8 bis 17 Gew.-%, mindestens eines AES-Pfropfpolymerisats,
D) 0 bis 54, vorzugsweise 3 bis 34, besonders bevorzugt 6 bis 25, insbesondere 8 bis 21 Gew.-%, mindestens eines teilchenförmigen mineralischen Füllstoffs,
E) 0,01 bis 10 Gew.-%, bevorzugt 0,05 bis 6 Gew.-%, besonders bevorzugt 0,1 bis 3 Gew.-% üblicher Farbmittel,
F) 0 bis 10 Gew.-%, bevorzugt 0,05 bis 3 Gew.-%, besonders bevorzugt 0,1 bis 0,9 Gew.-% weiterer üblicher Additive,
zur Herstellung von homogen eingefärbten Schlagzähmodifizierten Formteilen.

Als **Komponente A** enthalten die Zusammensetzungen erfindungsgemäß ein oder eine Mischung aus zwei oder mehr unterschiedlichen Polyalkylenterephthalaten. Polyalkylenterephthalate im Sinne der Erfindung sind Polyalkylenterephthalate, die sich von Terephthalsäure (oder ihren reaktionsfähigen Derivaten) und Alkandiolen beispielsweise auf Basis von Ethylenglykol, Propylenglycol oder Butandiol ableiten. Erfindungsgemäß werden als Komponente A bevorzugt Polybutylenterephthalat, Polytrimethylenterephthalat und/oder Polyethylenterephthalat, besonders bevorzugt Polybutylenterephthalat und/oder Polyethylenterephthalat, am meisten bevorzugt Polyethylenterephthalat eingesetzt.

Polyalkylenterephthalate im Sinne der Erfindung sind Realctionsprodukte aus aromatischen Dicarbonsäure oder ihren reaktionsfähigen Derivaten (z.B. Dimethylestern oder Anhydriden) und aliphatischen, cycloaliphatischen oder araliphatischen Diolen und Mischungen dieser Reaktionsprodukte.

Bevorzugte Polyalkylenterephthalate lassen sich aus Terephthalsäure (oder ihren reaktionsfähigen Derivaten) und aliphatischen oder cycloaliphatischen Diolen mit 2 bis 10 C-Atomen nach bekannten Methoden herstellen (Kunststoff-Handbuch, Bd. VIII, S. 695 FF, Karl-Hanser-Verlag, München 1973).

Bevorzugte Polyalkylenterephthalate enthalten mindestens 80, vorzugsweise 90 Mol.-%, bezogen auf die Dicarbonsäure, Terephthalsäurereste und mindestens 80, vorzugsweise mindestens 90 Mol.-%, bezogen auf die Diolkomponente, Ethylenglykol- und/oder Propandiol-1,3- und/oder Butandiol-1,4-reste.

Die bevorzugten Polyalkylenterephthalate können neben Terephthalsäureresten bis zu 20 Mol-% Reste anderer aromatischer Dicarbonsäuren mit 8 bis 14 C-Atomen oder aliphatischer Dicarbonsäuren mit 4 bis 12 C-Atomen enthalten, wie Reste von Phthalsäure, Isophthalsäure, Naphthalin-2,6-dicarbonsäure, 4,4'-Diphenyldicarbonsäure, Bernstein-, Adipin-, Sebacinsäure, Azelainsäure, Cyclohexandiessigsäure, Cyclohexandicarbonsäure.

Die bevorzugten Polyalkylenterephthalate können neben Ethylen- bzw. Propandiol-1,3- bzw. Butandiol-1,4-glykolresten bis zu 20 Mol.-% anderer aliphatischer Diole mit 3 bis 12 C-Atomen oder cycloaliphatischer Diole mit 6 bis 21 C-Atomen enthalten, z.B. Reste von Propandiol-1,3, 2-Ethylpropandiol-1,3, Neopentylglykol, Pentan-diol-1,5, Hexandiol-1.6, Cyclohexan-dimethanol-1,4, 3-Methylpentandiol-2,4, 2-Methylpentandiol-2,4, 2,2,4-Trimethylpentandiol-1,3 und -1,6,2-Ethylhexan-diol-1,3 2,2-Diethylpropandiol-1,3, Hexandiol-2,5, 1,4-Di-(β-hydroxyethoxy)-benzol, 2,2-Bis-(4-hydroxycyclohexyl)-propan, 2,4-Dihydroxy-1,1.,3,3-tetramethyl-cyclobutan, 2,2-bis-(3-β-hydroxyethoxyphenyl)-propan und 2,2-bis-(4-hydroxypropoxy-phenyl)-propan (DE-A 24 07 674, 24 07 776, 27 15 932).

Die Polyalkylenterephthalate können durch Einbau relativ kleiner Mengen 3- oder 4-wertiger Alkohole oder 3- oder 4-basischer Carbonsäure, wie sie z.B. in der DE-A 19 00 270 und der US-A 3 692 744 beschrieben sind, verzweigt werden. Beispiele für bevorzugte Verzweigungsmittel sind Trimesinsäure, Trimellitsäure, Trimethylolethan und -propan und Pentaerythrit.

Es ist ratsam, nicht mehr als 1 Mol.-% des Verzweigungsmittels, bezogen auf die Säurekomponente, zu verwenden.

Besonders bevorzugt sind Polyalkylenterephthalate, die allein aus Terephthalsäure und deren reaktionsfähigen Derivaten (z.B. deren Dialkylester) und Ethylenglykol und/oder Propandiol-1,3 und/oder Butandiol-1,4 hergestellt worden sind (Polyethy-len- und Polybutylenterephthalat), und Mischungen dieser Polyalkylenterephthalate.

Bevorzugte Polyalkylenterephthalate sind auch Copolyester, die aus mindestens zwei der obengenannten Säurekomponenten und/oder aus mindestens zwei der obengenannten Alkoholkomponenten hergestellt sind, besonders bevorzugte Copolyester sind Poly-(ethylenglykol/butandiol-1,4)-terephthalate.

Die Polyalkylenterephthalate besitzen im allgemeinen eine intrinsische Viskosität von ca. 0,4 bis 1,5, vorzugsweise 0,5 bis 1,3, jeweils gemessen in Phenol/o-Dichlorbenzol (1:1 Gew.-%) bei 25°C.

Bevorzugt können die erfindungsgemäß hergestellten Polyester auch im Gemisch mit anderen Polyestern und/oder weiteren Polymeren eingesetzt werden. Besonders bevorzugt werden Gemische von Polyalkylenterephthalaten mit anderen Polyestern, ganz besonders bevorzugt Gemische von Polybutylenterephthalat mit Polyethylenterephthalat eingesetzt.

Den Polyestern können übliche Additive wie z.B. Entformungsmittel, Stabilisatoren und/oder Fließmittel in der Schmelze zugemischt oder auf der Oberfläche aufgebracht werden.

Als **Komponente B** enthalten die erfindungsgemäßen Zusammensetzungen erfindungsgemäß ein Polycarbonat oder eine Mischung von Polycarbonaten.

Bevorzugte Polycarbonate sind solche Homopolycarbonate und Copolycarbonate auf Basis der Bisphenole der allgemeinen Formel (I),

HO-Z-OH (I)

worin Z ein divalenter organischen Rest mit 6 bis 30 C-Atomen ist, der eine oder mehrere aromatische Gruppen enthält.

Bevorzugt sind Bisphenole der Formel (Ia) 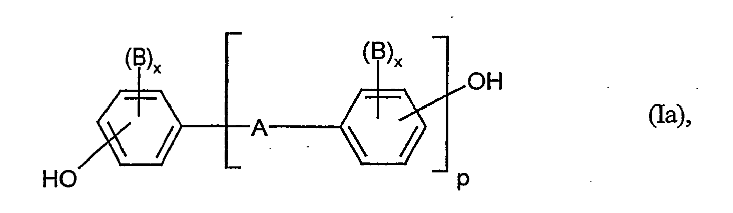 wobei
- A: eine Einfachbindung, C₁-C₅-Alkylen, C₂-C₅-Alkyliden, C₅-C₆-Cycloalkyliden, -O-, -SO-, -CO-, -S-, -SO₂-, C₆-C₁₂-Arylen, an das weitere aromatische gegebenenfalls Heteroatome enthaltende Ringe kondensiert sein können,
oder ein Rest der Formel (II) oder (III) 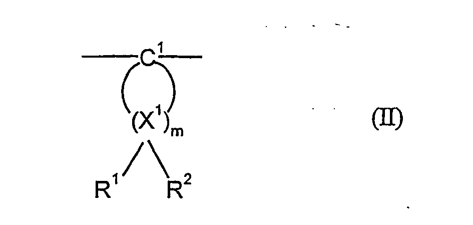 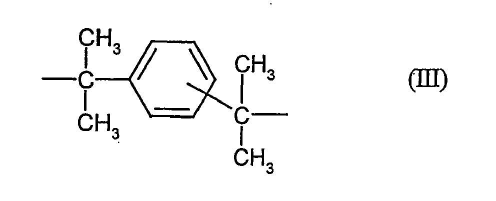
- B: jeweils C₁-C₁₂-Alkyl, vorzugsweise Methyl, Halogen, vorzugsweise Chlor und/oder Brom
- x: jeweils unabhängig voneinander 0, 1 oder 2,
- p: 1 oder 0 sind, und
- R¹ und R²: für jedes X¹ individuell wählbar, unabhängig voneinander Wasserstoff oder C₁-C₆-Akyl, vorzugsweise Wasserstoff, Methyl oder Ethyl,
- X¹: Kohlenstoff und
- m: eine ganze Zahl von 4 bis 7, bevorzugt 4 oder 5 bedeuten, mit der Maßgabe, dass an mindestens einen Atom X¹, R¹ und R² gleichzeitig Alkyl sind.

Beispiele für Bisphenole gemäß der allgemeinen Formel (I) sind Bisphenole, die zu den folgenden Gruppen gehören: Dihydroxydiphenyle, Bis-(hydroxyphenyl)-alkane, Bis-(hydroxyphenyl)-cycloalkane, Indanbisphenole, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide und α,α'-Bis-(hydroxyphenyl)-diisopropylben-zole.

Auch Derivate der genannten Bisphenole, die zum Beispiel durch Alkylierung oder Halogenierung an den aromatischen Ringen der genannten Bisphenole zugänglich sind, sind Beispiele für Bisphenole gemäß der allgemeinen Formel (I).

Beispiele für Bisphenole gemäß der allgemeinen Formel (I) sind insbesondere die folgenden Verbindungen: Hydrochinon, Resorcin, 4,4'-Dihydroxydiphenyl, Bis-(4 hydroxyphenyl)sulfid, Bis-(4-hydroxyphenyl)sulfon, Bis-(3,5-dimethyl-4-hydroxyphenyl)-methan, Bis-(3,5-dimethyl-4-hydroxyphenyl)-sulfon, 1,1-Bis-(3,5-dimethyl-4-hydroxyphenyl)-p/m-diisopropylbenzol, 1,1-Bis-(4-hydroxyphenyl)-1-phenyl-ethan, 1,1-Bis-(3,5-dimethyl-4-hydroxyphenyl)-cyclohexan, 1,1-Bis-(4-hydroxyphenyl)-3-methylcyclohexan, 1,1-Bis-(4-hydroxyphenyl)-3,3-dimethylcyclohexan, 1,1-Bis-(4-hydroxyphenyl)-4-methylcyclohexan. 1,1-Bis-(4-hydroxyphenyl)-cyclohexan, 1,1-Bis-(4-hydroxyphenyl)-3,3,5-trimethylcyclohexan, 2,2-Bis-(3,5-dichlor-4-hydroxyphenyl)-propan, 2,2-Bis-(3-methyl-4-hydroxyphenyl)-propan, 2,2-Bis-(3,5-dimethyl-4-hydroxyphenyl)-propan, 2,2-Bis-(4-hydroxyphenyl)-propan (d.h. Bisphenol A), 2,2-Bis-(3-chlor-4-hydroxyphenyl)-propan, 2,2-Bis-(3,5-dibrom-4-hydroxyphenyl)-propan, 2,4-Bis-(4-hydroxyphenyl)-2-methylbutan, 2,4-Bis-(3,5-dimethyl-4-hydroxyphenyl)-2-methylbutan, α,α'-Bis-(4-hydroxyphenyl)-o-diisopropylbenzol, α,α'-Bis-(4-hydroxyphenyl)-m-diisopropylbenzol (d. h. Bisphenol M), α,α'-Bis-(4-hydroxyphenyl)-p-diisopropylbenzol und Indanbisphenol.

Besonders bevorzugte Polycarbonate sind das Homopolycarbonat auf Basis von Bisphenol A, das Homopolycarbonat auf Basis von 1,1-Bis-(4-hydroxyphenyl)-3,3,5-trimethylcyclohexan und die Copolycarbonate auf Basis der beiden Monomere Bisphenol A und 1,1-Bis-(4-hydroxyphenyl)-3,3,5-trimethylcyclohexan.

Die beschriebenen Bisphenole gemäß der allgemeinen Formel (I) können nach bekannten Verfahren, z.B. aus den entsprechenden Phenolen und Ketonen, hergestellt werden.

Die genannten Bisphenole und Verfahren zu ihrer Herstellung sind zum Beispiel beschrieben in der Monographie H. Schnell, "Chemistry and Physics of Polycarbonates", Polymer Reviews, Band 9, S. 77-98, Interscience Publishers, New York, London, Sidney, 1964 und in US-A 3 028 635, in US-A 3 062 781, in US-A 2 999 835, in US-A 3 148 172, in US-A 2 991 273, in US-A 3 271 367, in US-A 4 982 014, in US-A 2 999 846, in DE-A 1 570 703, in DE-A 2 063 050, in DE-A 2 036 052, in DE-A 2 211 956, in DE-A 3 832 396, und in FR-A 1 561 518 sowie in den Japanischen Offenlegungsschriften mit den Anmeldenummern JP-A 62039 1986, JP-A 62040 1986 und JP-A 105550 1986.

1,1-Bis-(4-hydroxyphenyl)-3,3,5-trimethylcyclohexan und seine Herstellung ist z.B. beschrieben in US-A 4 982 014.

Indanbisphenole und ihre Herstellung sind zum Beispiel beschrieben in US-A 3 288 864, in JP-A 60 035 150 und in US-A 4 334 106. Indanbisphenole können zum Beispiel aus Isopropenylphenol oder dessen Derivaten oder aus Dimeren des Isopropenylphenols oder dessen Derivaten in Gegenwart eines Friedel-Craft-Katalysators in organischen Lösungsmitteln hergestellt werden.

Polycarbonate können nach bekannten Verfahren hergestellt werden. Geeignete Verfahren zur Herstellung von Polycarbonaten sind zum Beispiel die Herstellung aus Bisphenolen mit Phosgen nach dem Phasengrenzflächenverfahren oder aus Bisphenolen mit Phosgen nach dem Verfahren in homogener Phase, dem sogenannten Pyridinverfahren, oder aus Bisphenolen mit Kohlensäureestern nach dem Schmelzeumesterungsverfahren. Diese Herstellverfahren sind z.B. beschrieben in H. Schnell, "Chemistry and Physis of Polycarbonates", Polymer Reviews, Band 9, S. 31-76, Interscience Publishers, New York, London, Sidney, 1964. Die genannten Herstellverfahren sind auch beschrieben in D. Freitag, U. Grigo, P. R. Müller, H. Nouvertne, "Polycarbonates" in Encyclopedia of Polymer Science and Engineering, Volume 11, Second Edition, 1988, Seiten 648 bis 718 und in U. Grigo, K. Kircher und P.R. Müller "Polycarbonate" in Becker, Braun, Kunststoff-Handbuch, Band 3/1, Polycarbonate, Polyacetale, Polyester, Celluloseester, Carl Hanser Verlag München, Wien 1992, Seiten 117 bis 299 und in D.C. Prevorsek, B.T. Debona und Y. Kesten, Corporate Research Center, Allied Chemical Corporation, Morristown, New Jersey 07960, "Synthesis of Poly(estercarbonate) Copolymers" in Journal of Polymer Science, Polymer Chemistry Edition, Vol. 19, 75-90 (1980).

Das Schmelzeumesterungsverfahren ist insbesondere beschrieben in H. Schnell, "Chemistry and Physics of Polycarbonates", Polymer Reviews, Band 9, S. 44 bis 51, Interscience Publishers, New York, London, Sidney, 1964 sowie in DE-A 1 031 512, in US-A 3 022 272, in US-A 5 340 905 und in US-A 5 399 659.

Bei der Herstellung von Polycarbonat werden bevorzugt Rohstoffe und Hilfsstoffe mit einem geringen Grad an Verunreinigungen eingesetzt. Insbesondere bei der Herstellung nach dem Schmelzeumesterungsverfahren sollen die eingesetzten Bisphenole und die eingesetzten Kohlensäurederivate möglichst frei von Alkaliionen und Erdalkaliionen sein. Derart reine Rohstoffe sind zum Beispiel erhältlich, indem man die Kohlensäurederivate, zum Beispiel Kohlensäureester, und die Bisphenole umkristallisiert, wäscht oder destilliert.

Die erfindungsgemäß geeigneten Polycarbonate haben bevorzugt ein Gewichtsmittel der molaren Masse (M̅_{W}), welches sich z.B. durch Ultrazentrifugation oder Streulichtmessung bestimmen lässt, von 10 000 bis 200 000 g/mol. Besonders bevorzugt haben sie ein Gewichtsmittel der molaren Masse von 12 000 bis 80 000 g/mol, insbesondere bevorzugt 20 000 bis 35 000 g/mol.

Die mittlere molare Masse der erfindungsgemäßen Polycarbonate kann zum Beispiel in bekannter Weise durch eine entsprechende Menge an Kettenabbrechern eingestellt werden. Die Kettenabbrecher können einzeln oder als Mischung verschiedener Kettenabbrecher eingesetzt werden.

Geeignete Kettenabbrecher sind sowohl Monophenole als auch Monocarbonsäuren. Geeignete Monophenole sind z.B. Phenol, p-Chlorphenol, p-tert.-Butylphenol, Cumylphenol oder 2,4,6-Tribromphenol, sowie langkettige Alkylphenole, wie z.B. 4-(1,1,3,3-Tetramethylbutyl)-phenol oder Monoalkylphenole bzw. Dialkylphenole mit insgesamt 8 bis 20 C-Atomen in den Alkylsubstituenten wie z.B. 3,5-di-tert.-Butylphenol, p-tert.-Octylphenol, p-Dodecylphenol, 2-(3,5-Dimethyl-heptyl)-phenol oder 4-(3,5-Dimethyl-heptyl)-phenol. Geeignete Monocarbonsäuren sind Benzoesäure, Alkylbenzoesäuren und Halogenbenzoesäuren.

Bevorzugte Kettenabbrecher sind Phenol, p-tert.-Butylphenol, 4-(1,1,3,3-Tetramethylbutyl)-phenol und Cumylphenol.

Die Menge an Kettenabbrechern beträgt bevorzugt zwischen 0,25 und 10 Mol%, bezogen auf die Summe der jeweils eingesetzten Bisphenole.

Die erfindungsgemäß geeigneten Polycarbonate können in bekannter Weise verzweigt sein, und zwar vorzugsweise durch den Einbau von trifunktionellen oder mehr als trifunktionellen Verzweigern. Geeignete Verzweiger sind z.B. solche mit drei oder mehr als drei phenolischen Gruppen oder solche mit drei oder mehr als drei Carbonsäuregruppen.

Geeignete Verzweiger sind beispielsweise Phloroglucin, 4,6-Dimethyl-2,4,6-tri-(4-hydroxyphenyl)-hepten-2, 4,6-Dimethyl-2,4,6-tri-(4-hydroxyphenyl)-heptan, 1,3,5-Tri-(4-hydroxyphenyl)-benzol, 1,1,1-Tris-(4-hydroxyphenyl)-ethan, Tri-(4-hydroxyphenyl)-phenylmethan, 2,2-Bis-[4,4-bis-(4-hydroxyphenyl)-cyclohexyl]-propan, 2,4-Bis-(4-hydroxyphenyl-isopropyl)-phenol, . 2,6-Bis-(2-hydroxy-5'-methyl-benzyl)-4-methylphenol, 2-(4-Hydroxyphenyl)-2-(2,4-dihydroxyphenyl)-propan, Hexa-(4-(4-hydroxyphenyl-isopropyl)-phenyl)-terephthalsäureester, Tetra-(4-hydroxyphenyl)-methan, Tetra-(4-(4-hydroxyphenyl-isopropyl)-phenoxy)-methan und 1,4-Bis-(4',4"-dihydroxytriphenyl)-methylbenzol sowie 2,4-Dihydroxybenzoesäure, Trimesinsäure, Cyanurchlorid, 3,3-Bis-(3-methyl-4-hydroxyphenyl)-2-oxo-2,3-dihydroindol, Trimesinsäuretrichlorid und α,α',α"-Tris-(4-hydroxyphenol)-1,3,5-triisopropylbenzol.

Bevorzugte Verzweiger sind 1,1,1-Tris-(4-hydroxyphenyl)-ethan und 3,3-Bis-(3-methyl-4-hydroxyphenyl)-2-oxo-2,3-dihydroindol.

Die Menge der gegebenenfalls einzusetzenden Verzweiger beträgt bevorzugt 0,05 Mol-% bis 2 Mol-%, bezogen auf Mole an eingesetzten Bisphenolen.

Die Verzweiger können zum Beispiel im Falle der Herstellung des Polycarbonates nach dem Phasengrenzflächenverfahren mit den Bisphenolen und den Kettenabbrechern in der wässrig alkalischen Phase vorgelegt werden, oder in einem organischen Lösungsmittel gelöst zusammen mit den Kohlensäurederivaten zugegeben werden. Im Falle des Umesterungsverfahrens werden die Verzweiger bevorzugt zusammen mit den Dihydroxyaromaten oder Bisphenolen dosiert.

Bevorzugt einzusetzende Katalysatoren bei der Herstellung von Polycarbonat nach dem Schmelzeumesterungsverfahren sind die literaturbekannten Ammoniumsalze und Phosphoniumsalze (siehe beispielsweise US-A 3 442 864, JP-A-14742/72, US-A 5 399 659 und DE-A 19 539 290).

Copolycarbonate können auch verwendet werden. Copolycarbonate im Sinne der Erfmdung sind insbesondere Polydiorganosiloxan-Polycarbonat-Blockcopolymere, deren Gewichtsmittel der molaren Masse (M̅_{W}) bevorzugt 10 000 bis 200 000 g/mol, besonders bevorzugt 20 000 bis 80 000 g/mol beträgt (ermittelt durch Gelchromatographie nach vorheriger Eichung durch Lichtstreuungsmessung oder Ultrazentrifugation). Der Gehalt an aromatischen Carbonatstruktureinheiten in den Polydiorganosiloxan-Polycarbonat-Blockcopolymeren beträgt vorzugsweise 75 bis 97,5 Gew.-%, besonders bevorzugt 85 bis 97 Gew.-%. Der Gehalt an Polydiorganosiloxanstruktureinheiten in den Polydiorganosiloxan-Polycarbonat-Blockcopolymeren beträgt vorzugsweise 25 bis 2,5 Gew.-%, besonders bevorzugt 15 bis 3 Gew.%. Die Polydiorganosiloxan-Polycarbonat-Blockcopolymeren können zum Beispiel ausgehend von α,ω-Bishydroxyaryloxyendgruppen-haltigen Polydiorganosiloxanen mit einem mittleren Polymerisationsgrad von bevorzugt Pₙ = 5 bis 100, besonders bevorzugt Pₙ = 20 bis 80, hergestellt werden.

Die Polydiorganosiloxan-Polycarbonat-Blockpolymere können auch eine Mischung aus Polydiorganosiloxan-Polycarbonat-Blockcopolymeren mit üblichen polysiloxanfreien, thermoplastischen Polycarbonaten sein, wobei der Gesamtgehalt an Polydiorganosiloxanstruktureinheiten in dieser Mischung bevorzugt 2,5 bis 25 Gew.-% beträgt.

Solche Polydiorganosiloxan-Polycarbonat-Blockcopolymere sind dadurch gekennzeichnet, dass sie in der Polymerkette einerseits aromatische Carbonatstruktur-Einheiten (1) und andererseits Aryloxyendgruppen-haltige Polydiorganosiloxane (2) enthalten, 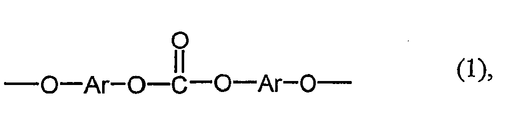 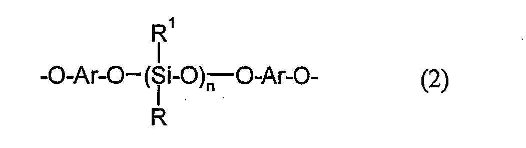 worin
- Ar: gleiche oder verschiedene difunktionelle aromatische Reste sind und
- R und R¹: gleich oder verschieden sind und lineares Alkyl, verzweigtes Alkyl, Alkenyl, halogeniertes lineares Alkyl, halogeniertes verzweigtes Alkyl, Aryl oder halogeniertes Aryl, vorzugsweise Methyl, bedeuten und
- n.: den mittleren Polymerisationsgrad von bevorzugt 5 bis 100, besonders bevorzugt 20 bis 80, bedeutet.

Alkyl ist in vorstehender Formel (2) vorzugsweise C₁-C₂₀-Alkyl, Alkenyl ist in vorstehender Formel (2) vorzugsweise C₂-C₆-Alkenyl; Aryl ist in vorstehender Formel (2) vorzugsweise C₆-C₁₄-Aryl. Halogeniert bedeutet in vorstehender Formel teilweise oder vollständig chloriert, bromiert oder fluoriert.

Beispiele für Alkyle, Alkenyl, Aryle, halognierte Alkyle und halogenierte Aryle sind Methyl, Ethyl, Propyl, n-Butyl, tert.-Butyl, Vinyl, Phenyl, Naphthyl, Chlormethyl, Perfluorbutyl, Perfluoroctyl und Chlorphenyl.

Derartige Polydiorganosiloxan-Polycarbonat-Blockcopolymere und ihre Herstellung werden zum Beispiel in US-A 3 189 662, US-A 3 821 325 und US-A 3 832 419 beschrieben.

Bevorzugte Polydiorganosiloxan-Polycarbonat-Blockcopolymere können z.B. hergestellt werden, indem man α,ω-Bishydroxyaryloxyendgruppen-haltige Polydiorganosiloxane zusammen mit anderen Bisphenolen, gegebenenfalls unter Mitverwendung von Verzweigern in den üblichen Mengen, z.B. nach dem Zweiphasengrenzflächenverfahren umsetzt (wie zum Beispiel beschrieben in H. Schnell, "Chemistry and Physis of Polycarbonates", Polymer Reviews, Band 9, S. 31-76, Interscience Publishers, New York, London, Sidney, 1964). Die als Edukte für diese Synthese verwendeten α,ω-Bishydroxyaryloxyendgruppen-haltige Polydiorganosiloxane und ihre Herstellung sind zum Beispiel in US-A 3 419 634 beschrieben.

Den Polycarbonaten könne übliche Additive wie z.B. Entformungsmittel in der Schmelze zugemischt oder auf der Oberfläche aufgebracht werden. Bevorzugt enthalten die verwendeten Polycarbonate bereits Entformungsmittel vor Compoundierung mit den anderen Komponenten der erfindungsgemäßen Formmassen.

Als **Komponente C)** werden erfindunggemäß ein oder eine Mischung aus zwei oder mehreren Propfcopolymeren eingesetzt, die durch Copolymerisation einer Mischung aus Styrol und Acrylnitril auf eine Grundlage eines Ethylen-Propylene-Copolymer (EPM) oder Ethylen-Propylen-nicht konjugiertes Dien-Copolymer (EPDM) erhalten werden, und als AES-Kautschuke bezeichnet werden.

Die erfindungsgemäß in den Zusammensetzungen eingesetzten Propfpolymerisate sind solche mit EP(D)M-Kautschuken als Propfgrundlage. Die Glastemperatur solcher Kautschuke kann 0 bis -60 °C betragen, sie haben nur eine geringe Anzahl von Doppelbindungen, beispielsweise weniger als 20 je 1000 Kohlenstoffatomen. Beispielhaft seien mindestens ein Ethylen und Propylen enthaltende Copolymerisate oder Terpolymerisat mit vorzugsweise einer nur geringen Anzahl an Doppelbindungen eingesetzt, insoweit wird verwiesen auf die EP-A 163 411 und 244 857. Letztere werden durch Polymerisation von mindestens 30 Gew.% Ethylen, mindestens etwa 30 Gew.% α-Olefin, wie z.B. Propylen, 1-Buten, Octen, Hexen und gegebenenfalls 0,5 bis 15 Gew.% einer nichtkonjugierten diolefinischen Komponente hergestellt. Als Terkomponente werden in der Regel Diolefine mit mindestens fünf Kohlenstoffatomen wie 5-Ethylidennorbornen, Dicyclopentadien, 2,2,1-Dicyclopentadien und 1,4-Hexadien eingesetzt. Geeignet sind ferner Polyalylenamere wie Polypentamer, Polyoctenamer, Polydodecanamer oder deren Gemische. Schließlich kommen auch teilhydrierte Polybutadienkautschuke in Betracht, bei denen mindestens 70% Restdoppelbindungen hydriert sind. In der Regel haben EP(D)M-Kautschuke eine Mooney-Viskosität ML1-4(100°C) von 25 bis 120. Sie sind im Handel erhältlich. Desweiteren können auch analog den unter dem Handelsnamen Engage angebotene Polyolefinelastomere oder Ethen/Octen-Polyolefine Verwendung finden. Aufgepfropft werden Vinylaromaten und/oder kernsubstituierte Vinylaromaton und Vinylcyanide und/oder (Meth)acrylsäure-(C₁-C₈)-alkylester.

Bevorzugt sind Pfropfpolymerisate von
C1) 5 bis 95 Gew.-%, vorzugsweise 10 bis 80 Gew.-%, insbesondere 20 bis 50 Gew.-%, wenigstens eines Vinylmonomeren auf
C2) 95 bis 5 Gew.-%, vorzugsweise 90 bie 20, insbesondere 80 bis 20 Gew.-% einer oder mehrerer Pfropfgrundlagen mit Glasübergangstemperaturen der Kautschukkomponente <0°C, vorzugsweise <-20°C, besonders bevorzugt <-40°C auf Basis von EP(D)M-Kautschuken.

Die Pfropfgrundlage C2) hat im allgemeinen eine mittlere Teilchengröße (d₅₀-Wert) von 0,05 bis 5 µm, vorzugsweise 0,10 bis 2 µm, besonders bevorzugt 0,15 bis 1 µm.

Monomere C1) sind vorzugsweise Gemische
C1.1) aus 50 bis 99, vorzugsweise 60 bis 80 Gew.-Teilen Vinylaromaten und/oder kernsubstituierte Vinylaromaten wie Styrol, α-Methylstyrol, p-Methylstyrol, p-Chlorstyrol und/oder Methacrylsäure-(C₁-C₈)-alkylester wie Methylmethacrylat und Ethylmethacrylat und
C1.2) 1 bis 50, vorzugsweise 40 bis 20 Gew.-Teilen Vinylcyanide (ungesättigte Nitrile wie Acrylnitril und Methacrylnitril) und/oder (Meth)acrylsäure-(C₁-C₈)-alkylester wie Methylmethacrylat, n-Butylacrylat, t-Butylacrylat und/oder Derivate, wie Anhydride und Imide ungesättigter Carbonsäuren, beispielsweise Maleinsäureanhydrid und N-Phenylmaleinimid.

Besonders bevorzugte Monmere C1.1) sind ausgewählt aus mindestens einem der Monomere Styrol, α-Methylstyrol, Methylmethacrylat, besonders bevorzugte Monomere C2.2) sind ausgewählt aus mindestens einem der Monomere Acrylnitril, Maleinsäureanhydrid und Methylmethacrylat.

Die Herstellung des Pfropfpolymerisats auf EP(D)M-Basis kann beispielsweise erfolgen, indem eine Lösung des EP(D)M-Elastomeren in dem Monomerengemisch und gegebenenfalls indifferenten Lösungsmitteln hergestellt wird und durch Radikalstarter wie Azoverbindungen oder Peroxiden bei höheren Temperaturen die Pfropf-reaktion durchgeführt wird. Beispielhaft seien die Verfahren der DE-AS 23 02 014 und DE-A 25 33 991 genannt. Es ist auch möglich in einer Suspension entsprechend der US-A 4 202 948 oder in Masse zu arbeiten.

Besonders bevorzugt sind AES-Kautschuke, wie sie in EP-A1 0 502 237 beschrieben sind. Derartige AES-Kautschuke können beispielsweise unter dem Namen Blendex WX 270 von der Fa. Ube Cycon Ltd, Tokio, Japan bzw. Royaltuf 374 von der Fa Uniroyal, Großbritannien bzw. AES 665 von der Fa Techno Polymers, Tokio, Japan bezogen werden.

Als **Komponente D)** enthalten die thermoplastischen Formmassen einen Füllstoff oder Verstärkungsstoff oder eine Mischung aus zwei oder mehr unterschiedlichen Füllstoffen und/oder Verstärkungsstoffen beispielsweise auf Basis von Talk, Glimmer, Silikat, Quarz, Titandioxid, Wollastonit, Kaolin, amorphe Kieselsäuren, Magnesiumcarbonat, Kreide, Feldspat, Bariumsulfat, Glaskugeln und/oder faserförmige Füllstoffe und/oder Verstärkungsstoffen auf der Basis von Kohlenstofffasern und/oder Glasfasern. Bevorzugt werden mineralische teilchenförmige Füllstoffe auf der Basis von Talk, Glimmer, Silikat, Quarz, Titandioxid, Wollastonit, Kaolin, amorphe Kieselsäuren, Magnesiumcarbonat, Kreide, Feldspat, Bariumsulfat und/oder Glasfasern eingesetzt. Insbesondere bevorzugt werden erfindungsgemäß mineralische teilchenförmige Füllstoffe auf der Basis von Talk, Wollastonit und/oder Glasfasern. Am meisten bevorzugt werden Füllstoffe auf Basis von Talk.

Insbesondere für Anwendungen, in denen Isotropie bei der Dimensionsstabilität und eine hohe thermische Dimensionsstabilität gefordert wird, wie beispielsweise in Kfz-Anwendungen für Karosserieaußenteile, werden bevorzugt mineralische Füllstoffe eingesetzt, besonders bevorzugt Talk, Wollastonit oder Kaolin.

Besonders bevorzugt sind auch nadelförmige mineralische Füllstoffe. Unter nadelförmigen mineralischen Füllstoffen wird erfindungsgemäß ein mineralischer Füllstoff mit stark ausgeprägtem nadelförmigen Charakter verstanden. Als Beispiel seien nadelförmigere Wollastonite genannt. Bevorzugt weist das Mineral ein Länge : Durchmesser - Verhältnis von 2:1 bis 35:1, besonders bevorzugt von 3:1 bis 19:1, am meisten bevorzugt von 4:1 bis 12:1 auf. Die mittlere Teilchengröße der erfindungsgemäßen nadelförmigen Mineralien liegt bevorzugt bei kleiner 20 µm, besonders bevorzugt bei kleiner 15 µm, insbesondere bevorzugt bei kleiner 10 µm, am meisten bevorzugt bei kleiner 5 µm, bestimmt mit einem CILAS GRANULOMETER.

Am meisten bevorzugt als Komponente D) werden mineralische Füllstoffe auf der Basis von Talk. Als mineralische Füllstoffe auf Basis von Talk im Sinne der Erfindung kommen alle teilchenförmigen Füllstoffe infrage, die der Fachmann mit Talk bzw. Talkum verbindet. Ebenfalls kommen alle teilchenförmigen Füllstoffe, die kommerziell angeboten werden und deren Produktbeschreibungen als charakterisierende Merkmale die Begriffe Talk bzw. Talkum enthalten, infrage.

Bevorzugt sind mineralische Füllstoffe, die einen Gehalt an Talk nach DIN 55920 von größer 50 Gew.-%, bevorzugt größer 80 Gew.-%, besonders bevorzugt größer 95 Gew.-% und insbesondere bevorzugt größer 98 Gew.-% bezogen auf die Gesamtmasse an Füllstoff aufweisen.

Die mineralischen Füllstoffe auf Basis von Talk können auch oberflächenbehandelt sein. Sie können beispielsweise mit einem Haftvermittlersystem z.B. auf Silanbasis ausgerüstet sein.

Die erfindungsgemäßen mineralischen Füllstoffe auf Basis von Talk haben bevorzugt eine obere Teilchen- bzw. Korngröße d97 kleiner 50 µm, bevorzugt kleiner 10, besonders bevorzugt kleiner 6 und insbesondere bevorzugt kleiner 2,5 µm. Als mittlere Korngröße d50 wird bevorzugt ein Wert kleiner 10, bevorzugt kleiner 6, besonders bevorzugt kleiner 2 und insbesondere bevorzugt kleiner 1 µm gewählt. Die d97- und d50-Werte von den Füllstoffen D werden nach Sedimentationsanalyse SEDIGRAPH D 5 000 bzw. nach Siebanalyse DIN 66 165 bestimmt.

Das mittlere Aspektverhältnis (Durchmesser zu Dicke) der teilchenförmigen Füllstoffe auf Basis von Talk liegt bevorzugt im Bereich 1 bis 100, besonders bevorzugt 2 bis 25 und insbesondere bevorzugt 5 bis 25, bestimmt an elektronenmikroskopischen Aufnahmen von Ultradünnschnitten der fertigen Produkte und Ausmessen einer repräsentativen Menge (ca. 50) von Füllstoffpartikeln.

Der Füllstoff und/oder Verstärkungsstoff kann gegebenenfalls oberflächenmodifiziert sein, beispielsweise mit einem Haftvermittler bzw. Haftvermittlersystem z.B. auf Silanbasis. Die Vorbehandlung ist jedoch nicht unbedingt erforderlich. Insbesondere bei Verwendung von Glasfasern können zusätzlich zu Silanen auch Polymerdispersionen, Filmbildner, Verzweiger und/oder Glasfaserverarbeitungshilfsmittel verwendet werden.

Besonders bevorzugt sind erfindungssgemäß auch Glasfasern, die im allgemeinen einen Faserdurchmesser zwischen 7 und 18, bevorzugt zwischen 9 und 15 µm haben, können als Endlosfasern oder als geschnittene oder gemahlene Glasfasern zugesetzt werden, wobei die Fasern mit einem geeigneten Schlichtesystem und einem Haftvermittler bzw. Haftvermittlersystem z.B. auf Silanbasis ausgerüstet sein können.

Gebräuchliche Silanverbindungen zur Vorbehandlung haben beispielsweise die allgemeine Formel

(X-(CH2)q)k-Si-(O-CrH2r+1)4-k

in der die Substituenten folgende Bedeutung haben:
- x: NH2-,HO-, 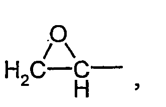
- q: eine ganze Zahl von 2 bis 10, bevorzugt 3 bis 4
- r: eine ganze Zahl von 1 bis 5, bevorzugt 1 bis 2
- k: eine ganze Zahl von 1 bis 3, bevorzugt 1

Bevorzugte Silanverbindungen sind Aminopropyltrimethoxysilan, Aminobutyltrimethoxysilan, Aminopropyltriethoxysilan, Aminobutyltriethoxysilan sowie die entsprechenden Silane, welche als Substituent X eine Glycidylgruppe enthalten.

Die Silanverbindungen werden im allgemeinen in Mengen von 0,05 bis, vorzugsweise 0,5 bis 1,5 und insbesondere 0,8 bis 1 Gew.-% bezogen auf den mineralischen Füllstoff zur Oberflächenbeschichtung eingesetzt.

Die teilchenförmigen Füllstoffe können bedingt durch die Verarbeitung zur Formmasse bzw. Formkörper in der Formmasse bzw. im Formkörper einen kleineren d97- bzw. d50-Wert aufweisen als die ursprünglich eingesetzten Füllstoffe. Die Glasfasern können bedingt durch die Verarbeitung zur Formmasse bzw. Formkörper in der Formmasse bzw. im Formkörper kürzere Längenverteilungen als ursprünglich eingesetzt auf.

Die Teilchendurchmesser am fertigen Produkt können dabei zum Beispiel dadurch bestimmt werden, dass elektronenmikroskopische Aufnahmen von Dünnschnitten der Polymermischung aufgenommen und mindestens 25, bevorzugt mindestens 50 Füllstoffteilchen für die Auswertung herangezogen werden.

Als Komponente E) können die Zusammensetzungen erfindungsgemäß übliche Farbmittel und/oder Pigmente enthalten, wie z.B. Titandioxid, Ultramarinblau, Eisenoxid, Russ, Phthalocyanine, Chinacridone, Perylene, Nigrosin und Anthrachinone und deren Derivate eingesetzt werden. Die Farbmittel und/oder Pigmente können in Substanz zugegebenen werden oder als Masterbatche beispielsweise in Komponente A), Kombonente B), Komponente C), Polyethylen, Polypropylen, Wachsen oder Parafin.

Die erfindungsgemäßen Zusammensetzungen können als **Komponente F**) weiterhin übliche Zusatzstoffe enthalten, die im allgemeinen bis 15, vorzugsweise in einer Menge von 0,01 bis 10, besonders bevorzugt 0,05 bis 5, insbesondere bevorzugt 0,1 bis 3 Gew.-%, bezogen auf das Gesamtgewicht der Formmassen, zugesetzt werden können.

Alle üblichen Additive wie z.B. Stabilisatoren (zum Beispiel UV-Stabilisatoren, Thermostabilisatoren), Antistatika, Fließhilfsmittel, Entformungsmittel, Brandschutzadditive, Emulgatoren, Nukleierungsmittel, Weichmacher, Gleitmittel, pH-Wert erniedrigende Additive (z.B. Carboxylgruppen enthaltende Verbindungen), Additive zur Erhöhung der Leitfähigkeit, Farbstoffe und Pigmente kommen infrage. Die genannten und weitere geeignete Additive sind zum Beispiel beschrieben in Gächter, Müller, Kunststoff-Additive, 3. Ausgabe, Hanser-Verlag, München, Wien, 1989. Die Additive können alleine oder in Mischung bzw. in Form von Masterbatchen eingesetzt werden. Die Additive können zugemischt und/oder auf die Oberfläche aufgebracht werden.

Als Stabilisatoren können zum Beispiel sterisch gehinderte Phenole und/oder Phosphite, Hydrochinone, aromatische sekundäre Amine wie Diphenylamine, substituierte Resorcine, Salicylate, Benzotriazole und Benzophenone, sowie verschieden substituierte Vertreter dieser Gruppen und deren Mischungen eingesetzt werden.

Als Nukleierungsmittel können z.B. Natriumphenylphosphinat, Aluminiumoxid, Siliziumdioxid sowie bevorzugt Talkum und die weiter vorne beschriebenen Nukleierungsmittel eingesetzt werden.

Als Gleit- und Entformungsmittel können Esterwachse, Penteritrytstearat (PETS), langkettige Fettsäuren (z.B. Stearinsäure oder Behensäure), deren Salze (z.B. Ca-oder Zn-Stearat) sowie Amidderivate (z.B. Ethylen-bis-stearylamid) oder Montanwachse (Mischungen aus geradkettigen, gesättigten Carbonsäuren mit Kettenlängen von 28 bis 32 C-Atomen) sowie niedermolekulare Polyethylen- bzw. Polypropylenwachse eingesetzt werden.

Als Weichmacher können zum Beispiel Phthalsäuredioctylester, Phthalsäuredibenzylester, Phthalsäurebutylbenzylester, Kohlenwasserstofföle, N-(n-Butyl)benzolsulfonamid eingesetzt werden.

Um leitfähige Formmassen zu erhalten, können Russe, Leitfähigkeitsrusse, Carbonfibrillen, nanoskalige Graphitfasern (Nanotubes), Graphit, leitfähige Polymere, Metallfasern sowie andere übliche Additive zur Erhöhung der Leitfähigkeit zugesetzt werden.

Als Flammschutzmittel können handelsübliche organische Halogenverbindungen mit Synergisten oder handelsübliche organische Stickstoffverbindungen oder organisch/- anorganische Phosphorverbindungen einzeln oder im Gemisch eingesetzt werden. Auch mineralische Flammschutzadditive wie Magnesiumhydroxid oder Ca-Mg-Carbonat-Hydrate (z.B. DE-A 4 236 122) können eingesetzt werden. Als halogenhaltige, insbesondere bromierte und chlorierte Verbindungen seien beispielhaft genannt: Ethylen-1,2-bistetrabromphthalimid, epoxidiertes Tetrabrombisphenol A-Harz, Tetrabrombisphenol-A-oligocarbonat, Tetrachlorbisphenol-A-oligocarbonat, Pentabrompolyacrylat, bromiertes Polystyrol. Als organische Phosphorverbindungen sind die Phosphorverbindungen gemäß WO-A 98/17720 (PCT/EP/05705) geeignet, z.B. Triphenylphosphat (TPP), Resorcinol-bis-(diphenylphosphat) einschließlich Oligomere sowie Bisphenol-A-bis-diphenylphosphat einschließlich Oligomere (vgl. z.B. EP-A 363 608 und EP-A 640 655), Melaminphosphat, Melaminpyrophosphat, Melaminpolyphosphat und deren Mischungen. Als Stickstoffverbindungen kommen insbesondere Melamin und Melamincyanurat infrage. Als Synergisten sind z.B. Antimonverbindungen, insbesondere Antimontrioxid und Antimonpentoxid, Zinkverbindungen, Zinnverbindungen wie z.B. Zinnstannat und Borate geeignet. Kohlenstoffbildner und und Tetrafluorethylenpolymerisate können zugesetzt werden. Die Flammschutzmittel, gegebenenfalls mit einem Synergisten, wie Antimonverbindungen, und Antidripping-Mittel werden im allgemeinen bis zu einer Menge von 30, vorzugsweise 20 Gew.-% (bezogen auf die Gesamtzusammensetzung) eingesetzt.

Als Zusatzstoffe können auch Verstärkungsstoffe z.B. in Form von Glasfasern zugesetzt werden

Gegenstand der Erfindung sind weiterhin ein Verfahren zur Herstellung der Zusammensetzungen, die Verwendung der erfindungsgemäßen Zusammensetzung zur Herstellung von Halbzeugen und Formteilen sowie daraus hergestellte Halbzeuge und Formteile.

Die Herstellung der erfindungsgemäßen Zusammensetzungen erfolgt nach an sich bekannten Verfahren durch Mischen der Komponenten. Es kann vorteilhaft sein, einzelne Komponenten vorzumischen. Vorzugsweise geschieht das Mischen der Komponenten A bis D sowie weiterer Bestandteile bei Temperaturen von 220 bis 330°C durch gemeinsames Kneten, Extrudieren oder Verwalzen der Komponenten.

Die erfindungsgemäßen Zusammensetzungen können nach üblichen Verfahren zu Halbzeugen oder Formteilen aller Art verarbeitet werden. Als Beispiele für Verarbeitungsverfahren seien Extrusionsverfahren und Spritzgussverfahren genannt. Als Beispiele für Halbzeuge seien genannt Folien und Platten.

Die Formteile eignen sich aufgrund der hohen Farbhomogenität besonders für Anwendungen, die sichtbar und optisch bedeutend sind. Die Formteile können erfindungsgemäß unlackiert oder mit einem transparenten Klarlacksystem beschichtet eingesetzt werden. Die Formteile können klein- oder großteilig sein und für Außen-oder Innenanwendungen eingesetzt werden. Bevorzugt werden großteilige Formteile für den Fahrzeugbau, insbesondere den Automobilsektor hergestellt. Insbesondere können aus den erfmdungsgemäßen Formmassen Karosserieaußenteile wie z.B. Kotflügel, Heckklappen, Motorhauben, Stoßfänger, Ladeflächen, Abdeckungen für Ladeflächen, Autodächer, Lufteinlassgitter, Spoiler oder andere Karosserieanbauteile gefertigt werden.

Formteile bzw. Halbzeuge aus den erfindungsgemäßen Formmassen/Zusammensetzungen können sich auch im Verbund mit weiteren Werkstoffen wie z.B. Metall oder Kunststoff befinden. Die erfindungsgemäßen Formmassen bzw. die Formteile/Halbzeuge aus den erfindungsgemäßen Formmassen können durch übliche Techniken des Verbinden und Zusammenfügen mehrerer Komponenten oder Teile wie z.B. Coextrusion, Folienhinterspritzen, Umspritzen von Einlegeteilen, Kleben, Verschweißen, Verschrauben oder Kammern im Verbund mit anderen Werkststoffen oder sich selbst für die Herstellung von Fertigteilen wie z.B. Karosserieaußenteilen eingesetzt werden.

Die erfindungsgemäßen Formmassen können auch für zahlreiche weitere Anwendungen verwendet werden. Beispielsweise seien genannt die Verwendung in der Elektro- und Elektroniktechnik, sowie im Bausektor. In den genannten Einsatzgebieten können Formteile aus den erfindungsgemäßen Formmassen zum Beispiel als Lampenabdeckungen, als Sicherheitsscheiben, als Gehäusematerial für elektronische Geräte, als Gehäusematerial für Haushaltsgeräte, als Platten zur Herstellung von Abdeckungen verwendet werden.

Die erfindungsgemäßen Zusammensetzungen zeichnen sich durch eine sehr gute Farbhomogenität aus. Darüber hinaus erfüllen sie hohe Anforderungen hinsichtlich Verarbeitungsstabilität, Fließfähigkeit der Schmelze, Zähigkeit, Tieftemperaturzähigkeit, Steifigkeit, Wärmeformbeständigkeit, thermische Ausdehnung, Oberflächenqualität, Lackierbarkeit, Chemikalienbeständigkeit und Kraftstoffbeständigkeit.

### Beispiele

### Komponente A

Polyethylenterephthalat Typ A1: Es handelt sich um Polyethylenterephthalat mit einer intrinsischen Viskosität IV von 0,74 cm³/g und einer isothermen Kristallisationszeit bei 215°C von ca. 4,2 Minuten.

Die intrinsische Viskosität wird gemessen in Phenol/o-Dichlorbenzol (1:1 Gew.-Teile) bei 25°C.

Die Bestimmung der isothermen Kristallisationszeit von PET mit der DSC-Methode (differential scanning calometry) erfolgt mit einem PERKIN ELMER DSC 7 Differential Scanning Calometer (Einwaage ca. 10 mg, gelochtes A1-Pfännchen) mit folgendem Temperaturprogramm:
1. Aufheizen von 30°C bis 290°C mit 40°C/min,
2. 5 min. isotherm bei 290°C,
3. Kühlen von 290°C auf 215°C mit 160°C/min,
4. 30 min isotherm bei 215°C (Kristallisationstemperatur).
Die Auswertungssoftware ist PE Thermal Analysis 4.00.

### Komponente B

Lineares Polycarbonat (Makrolon 2805 von Bayer AG, Leverkusen, Deutschland) auf Basis Bisphenol A mit einer Viskosität ηrel. von ca. 1,29 (Meßbedingungen: 5 g Polycarbonat pro Liter Methylenchlorid, 25°C) und einem Molekulargewicht Mw von ca. 29 000 g/mol (bestimmt mit GPC-Methoden gegen Polycarbonatstandard).

### Komponente C1

Bei dem verwendeten AES-Pfropfpolymerisat handelt es sich um Blendex WX 270 der Fa. Ube Cycon Ltd., Tokio, Japan.

### Acrylatkautschuk 1

Bei dem zum Vergleich verwendeten Acrylat-Pfropfpolymerisat handelt es sich um Paraloid EXL 2300 von Rohm und Haas Deutschland GmbH, Frankfurt.

### Acrylatkautschuk 2

Bei dem zum Vergleich verwendeten Acrylat-Pfropfpolymerisat handelt es sich um Paraloid EXL 3361 von Rohm und Haas Deutschland GmbH, Frankfurt.

### Acrylatkautschuk 3

Bei dem zum Vergleich verwendeten Acrylat-Pfropfpolymerisat handelt es sich um Paraloid EXL 2314 von Rohm und Haas Deutschland GmbH, Frankfurt.

### Komponente E

Als Farbmittel wurde ein 50% Rußmasterbatch in Polyethylen mit der Bezeichnung Ruß Plasblack PM 3798 (Handelsprodukt der Fa. Cabot) eingesetzt.

Als Additive der Komponente F wurde eine Mischung üblicher Stabilisatoren, Nukleierungsmittel und Entformungsmittel verwendet.

Compoundierungen erfolgten auf einem Zweiwellenextruder des Typs ZSK32 (Werner und Pfleiderer) bei Massetemperaturen von 250 bis 290°C.

Die Prüfkörper wurden auf einer Spritzgießmaschine des Typs Arburg 320-210-500 bei Massetemperaturen von 260 bis 280°C und Werkzeugtemperaturen von 70 bis 90°C verspritzt.

Die Ausprüfungen der erfindungsgemäßen Formmassen erfolgte nach folgenden Methoden:
Vicat B: Wärmeformstabilität bzw. Wärmevormbeständigkeit nach DIN ISO 306/B 120 in Silikonöl.
Izod-Schlagzähigkeit: Zähigkeit nach ISO 180 Methode 1 U bei -23°C.
Izod-Kerbschlagzähigkeit: Zähigkeit nach ISO 180 Methode 1 A bei 23°C
Zugmodul: Steifigkeit nach DIN / EN / ISO 527-2/1A.
Reißdehnung: Dehnbarkeit bestimmt nach DIN/EN/ISO 527-2/1A.
MVR: Fließfähigkeit nach DIN/ISO 1133 bei 280°C und 2,16 kg.
Farbhomogenität: Bestimmung der Farbhomogenität der Oberfläche durch optische Begutachtung.
   "+" bedeutet eine homogene Einfärbung ohne Ausbildung von Streifen geringerer Farbintensität senkrecht zur Fließrichtung
   "o" bedeutet eine weitgehend homogene Einfärbung mit leichter Ausbildung von Streifen geringerer Farbintensität senkrecht zur Fließrichtung
   "-" bedeutet eine inhomogene Einfärbung mit starker Ausbildung von Streifen senkrecht zur Fließrichtung.
Die Beurteilung der Farbhomogenität erfolgte an 150x105x1,6mm-Platten, die mit einer Massetemperatur von 270°C, einer Werkzeugtemperatur von 80°C und einer Füllgeschwindigkeit von 50 mm/s über einen Filmanguß an einer 105 mm-Seite hergestellt wurden.

Wie aus Tabelle 1 ersichtlich zeigen erfindungsgemäße Formmassen eine sehr gute Farbhomogenität bei gleichzeitig guten mechanischen Eigenschaften. Gegenüber den hinsichtlich Farbhomogenität schlechteren Vergleichsbeispielen Vgl. 1 und Vgl. 3 konnte sogar mit verringertem AES-Kautschukgehalt in Bsp. 2 die Zähigkeit von Vgl.1 und Vgl. 3 noch übertroffen werden.

Zusammensetzung und Eigenschaften der erfindungsgemäßen thermoplastischen Formmassen gehen aus Tabellen 1 hervor.

**Tabelle 1**

| **Beispiele** | | **Bsp. 1** | **Bsp.2** | **Vgl.1** | **Vgl.2** | **Vgl.3** |
|---|---|---|---|---|---|---|
| Komponente A, Polyethylenterephthalat | [%] | 37,9 | 39,9 | 37,9 | 37,9 | 37,9 |
| Komponente B, Polycarbonat | | 50,0 | 50,0 | 50,0 | 50,0 | 50,0 |
| Komponente C, AES-Kautschuk | [%] | 10,0 | 8,0 | -- | -- | -- |
| Acrylatkautschuk 1 | [%] | -- | -- | 10,0 | -- | -- |
| Acrylatkautschuk 2 | [%] | -- | -- | -- | 10,0 | -- |
| Acrylatkautschuk 3 | [%] | -- | -- | -- | -- | 10,0 |
| Komponente E, Ruß | [%] | 1,2 | 1,2 | 1,2 | 1,2 | 1,2 |
| Additive | [%] | 0,9 | 0,9 | 0,9 | 0,9 | 0,9 |
| Vicat B | [°C] | 129 | 131 | 135 | 135 | 135 |
| Izod-Schlagzähigkeit -20°C | [kJ/m²] | 69 | 59 | 42 | 75 | 34 |
| Izod-Kerbschlagzähigkeit 23°C | [kJ/m²] | 6,5 | 6,3 | 4,3 | 14,1 | 4,2 |
| Zugmodul | [MPa] | 2281 | 2376 | 2334 | 2295 | 2255 |
| Reißdehnung | [%] | 11 | 16 | 5 | 30 | 7 |
| MVR (280°C/2,16 kg) | [cm³/10 min] | 20 | 25 | 43 | 24 | 27 |
| Farbhomogenität | | + | + | - | - | o |

## Patentansprüche

1. Verwendung von Zusammensetzungen enthaltend
A) 4 bis 80 Gew.%, mindestens eines Polyalkylenterephthalats,
B) 10 bis 90 Gew.%, mindestens ein aromatisches Polycarbonat,
C) 1,5 bis 30 Gew.%, mindestens eines AES-Pfropfpolymerisats,
D) 0 bis 54 Gew.-%, mindestens eines teilchenförmigen mineralischen Füllstoffs,
E) 0,01 bis 10 Gew.-% Farbmittel, und
F) 0 bis 10 Gew.-% weiterer Additive
zur Herstellung von homogen eingefärbten schlagzächmodifizierten Formteile

2. Verwendung von Zusammensetzungen gemäß Anspruch 1, wobei sich C zusammensetzt aus Pfropfpolymerisaten von
C1) 5 bis 95 Gew.-% wenigstens eines Vinylmonomeren auf
C2) 95 bis 5 Gew.-% einer oder mehrerer Pfropfgrundlagen mit Glasübergangstemperaturen der Kautschukkomponente <0°C auf Basis von EP(D)M-Kautschuken
zür Herstellung von homogen eingefärbten schlagzähmodifizierten Formteilen.

3. Verwendung von Zusammensetzungen gemäß einem oder mehreren der vorangegangenen Ansprüche, wobei Polyethylenterephthalat als Komponente A eingesetzt wird, zur Herstellung von homogen eingefärbten schlagzähmodifizierten Formteilen.

4. Verwendung gemäß Anspruch 1, wobei die Zusammensetzung
A) 12 bis 40 Gew.-% mindestens eines Polyalkylenterephthalats,
B) 25 bis 55 Gew.-% mindestens ein aromatisches Polycarbonat,
C) 6 bis 20 Gew.-% mindestens eines AES-Pfropfpolymerisats,
D) 3 bis 34 Gew.-% mindestens eines teilchenförmigen mineralischen Füllstoffs,
E) 0,05 bis 6 Gew.-% Farbmittel, und
F) 0,05 bis 3 Gew.-% weitere Additive
enthält.

5. Verwendung gemäß Anspruch 1 oder 4, wobei die Zusammensetzung
A) 19 bis 29 Gew.-% mindestens eines Polyalkylenterephthalats,
B) 30 bis 50 Gew.-% mindestens ein aromatisches Polycarbonat,
C) 8 bis 17 Gew.-% mindestens eines AES-Pfropfpolymerisats,
D) 6 bis 25 Gew.-% mindestens eines teilchenförmigen mineralischen Füllstoffs,
E) 0,1 bis 3 Gew.-% Farbmittel, und
F) 0,05 bis 3 Gew.-% weitere Additive
enthält.

6. Verwendung gemäß einem oder mehreren der vorangegangen Ansprüche, wobei sich die Komponente C der Zusammensetzung zusammensetzt aus Pfropfpolymerisaten von
C1) 10 bis 80 Gew.-% wenigstens eines Vinylmonomeren auf
C2) 90 bis 20 Gew.% einer oder mehrerer Pfropfgrundlagen mit Glasübergangstemperaturen der Kautschukkomponente <0°C auf Basis von EP(D)M-Kautschuken.

## Claims

1. Use of compositions containing
A) 4 to 80 wt.% of at least one polyalkylene terephthalate,
B) 10 to 90 wt.% of at least one aromatic polycarbonate,
C) 1.5 to 30 wt.% of at least one AES graft polymer,
D) 0 to 54 wt.% of at least one particulate mineral filler,
E) 0.01 to 10 wt.% of colorants, and
F) 0 to 10 wt.% of further additives, for the production of homogeneously coloured impact-resistant modified moulded parts.

2. Use of compositions according to claim 1, wherein C is composed of graft polymers of
C1) 5 to 95 wt.% of at least one vinyl monomer,
C2) 95 to 5 wt.% of one or more graft bases with glass transition temperatures of the rubber component <0°C based on EP(D)M rubbers, for the production of homogeneously coloured impact-resistant modified moulded parts.

3. Use of compositions according to one or more of the preceding claims, wherein polyethylene terephthalate is used as component A, for the production of homogeneously coloured impact-resistant modified moulded parts.

4. Use according to claim 1, wherein the composition contains
A) 12 to 40 wt.% of at least one polyalkylene terephthalate,
B) 25 to 55 wt.% of at least one aromatic polycarbonate,
C) 6 to 20 wt.% of at least one AES graft polymer,
D) 3 to 34 wt.% of at least one particulate mineral filler,
E) 0.05 to 6 wt.% of colorants, and
F) 0.05 to 3 wt.% of further additives.

5. Use according to claim 1 or 4, wherein the composition contains
A) 19 to 29 wt.% of at least one polyalkylene terephthalate,
B) 30 to 50 wt.% of at least one aromatic polycarbonate,
C) 8 to 17 wt.% of at least one AES graft polymer,
D) 6 to 25 wt.% of at least one particulate mineral filler,
E) 0.1 to 3 wt.% of colorants, and
F) 0.05 to 3 wt.% of further additives.

6. Use according to one or more of the preceding claims, wherein the component C of the composition is composed of graft polymers of
C1) 10 to 80 wt.% of at least one vinyl monomer on
C2) 90 to 20 wt.% of one or more graft bases with glass transition temperatures of the rubber component < 0°C based on EP(D)M rubbers.

## Revendications

1. Utilisation de compositions contenant :
A) 4 à 80% en poids d'au moins un poly(téréphtalate d'alcoylène),
B) 10 à 90% en poids d'au moins un polycarbonate aromatique,
C) 1,5 à 30% en poids d'au moins un polymère greffé AES,
D) 0 à 54% en poids d'au moins une charge minérale particulaire,
E) 0,01 à 10% en poids de colorant, et
F) 0 à 10% en poids d'autres additifs,
pour la préparation de pièces moulées teintées de manière homogène, à résilience modifiée.

2. Utilisation des compositions selon la revendication 1, où C se compose de polymères greffés de
C1) 5 à 95% en poids d'au moins un monomère vinylique sur
C2) 95 à 5% en poids d'une ou plusieurs bases de greffage ayant une température de transition vitreuse des composants caoutchoucs < 0°C, à base de caoutchouc EP(D)M, pour la préparation de pièces moulées teintées de manière homogène, à résilience modifiée.

3. Utilisation des compositions selon l'une ou plusieurs des revendications précédentes, où le poly(téréphtalate d'éthylène) est mis en oeuvre comme composant A, pour la préparation de pièces moulées teintées de manière homogène, à résilience modifiée.

4. Utilisation selon la revendication 1, où la composition contient :
A) 12 à 40% en poids d'au moins un poly(téréphtalate d'alcoylène),
B) 25 à 55% en poids d'au moins un polycarbonate aromatique,
C) 6 à 20% en poids d'au moins un polymère greffé AES,
D) 3 à 34% en poids d'au moins une charge minérale particulaire,
E) 0,05 à 6% en poids de colorant, et
F) 0,05 à 3% en poids d'autres additifs.

5. Utilisation selon la revendication 1 ou 4, où la composition contient :
A) 19 à 29% en poids d'au moins un poly(téréphtalate d'alcoylène),
B) 30 à 50% en poids d'au moins un polycarbonate aromatique,
C) 8 à 17% en poids d'au moins un polymère greffé AES,
D) 6 à 25% en poids d'au moins une charge minérale particulaire,
E) 0,1 à 3% en poids de colorant, et
F) 0,05 à 3% en poids d'autres additifs.

6. Utilisation selon l'une ou plusieurs des revendications précédentes, où le composant C de la composition se compose de polymères greffés de
C1) 10 à 80% en poids d'au moins un monomère vinylique sur
C2) 90 à 20% en poids d'une ou plusieurs bases de greffage ayant une température de transition vitreuse des composants caoutchoucs < 0°C, à base de caoutchouc EP(D)M.
